Europäisches Patentamt

European Patent Office

Office européen des brevets

(11) Veröffentlichungsnummer : **0 188 638**
**B1**

(12)  EUROPÄISCHE PATENTSCHRIFT

(45) Veröffentlichungstag der Patentschrift :
25.05.88

(51) Int. Cl.⁴ : **H 02 J    3/42**

(21) Anmeldenummer : 85100583.5

(22) Anmeldetag : 21.01.85

(54) Verfahren zum Parallelschalten von elektrischen Synchronmaschinen und/oder elektrischen Drehstrom-Netzen.

(43) Veröffentlichungstag der Anmeldung :
30.07.86 Patentblatt 86/31

(45) Bekanntmachung des Hinweises auf die Patenterteilung : 25.05.88 Patentblatt 88/21

(84) Benannte Vertragsstaaten :
CH DE FR IT LI SE

(56) Entgegenhaltungen :
DE-A- 2 529 944
FR-A- 2 052 091
US-A- 3 599 007
SIEMENS-ZEITSCHRIFT, Band 52, Heft 3, März 1978,
Seiten 149-152, Erlangen, DE; E. BORN u.a.: "Parallelschaltgerät in Zweikanalansführung"

(73) Patentinhaber : Siemens Aktiengesellschaft Berlin
und München
Wittelsbacherplatz 2
D-8000 München 2 (DE)

(72) Erfinder : Leibold, Helmut
Saubertstrasse 3
D-8500 Nürnberg (DE)

## Beschreibung

Die Erfindung betrifft ein Verfahren zum Parallelschalten nach dem Oberbegriff des Patentanspruchs.

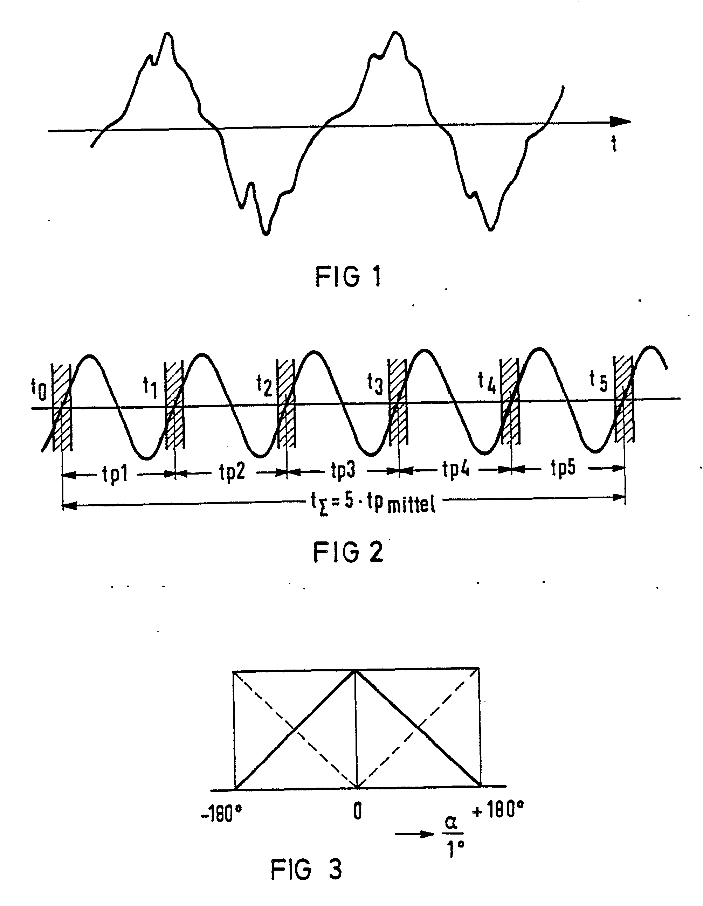

Ein solches Verfahren ist in der Siemens-Zeitschrift 52 (1978) Heft 3, Seiten 149 ff beschrieben. Dabei werden mit statisch arbeitenden Meßschaltungen die Nulldruchgänge zweier miteinander zu vergleichender Spannungen erfaßt und ausgewertet. Bei diesem Verfahren treten bei stark verzerrten, d. h. gemäß Fig. 1 stark von der Sinusform abweichenden Spannungskurven im Bereich des Nulldurchganges aber unzulässig große Meßfehler auf, die ein gefahrloses Parallelschalten in Frage stellen können, trotz der an sich hohen Schaltgenauigkeit der auf die genannte Weise arbeitenden Synchronisiereinrichtung, die außerdem auch noch die Anpassung der Maschinenfrequenz und der Maschinenspannung der an das Netz parallelzuschaltenden Synchronmaschine an die Netzfrequenz und die Netzspannung vornimmt, so daß der genannte Parallelschaltvorgang selbständig erfolgt. Die Synchronisiereinrichtung prüft demnach, ob an den Zuschaltstellen der Synchronmaschine oder eines Teilnetzes der Winkel $\alpha$ zwischen den beiden zu vergleichenden Spannungen innerhalb bestimmter Grenzwerte liegt und es wird zum Parallelschalten der genaue Schaltpunkt unter Berücksichtigung der jeweils zulässigen Frequenzdifferenz und der für jeden parallelschaltenden Leistungsschalter bekannten Einschaltzeit selbsttätig ermittelt.

Dabei muß der Einschaltbefehl für den betreffenden Leistungsschalter in Abhängigkeit von der Frequenzdifferenz $\Delta f$ und der Schalter-Einschaltzeit $T_E$ bei einem Schaltwinkel $\alpha_s$ vor dem Phasengleichheitspunkt gegeben werden, damit der Schalter genau bei Phasengleichheit der beiden miteinander verglichenen Spannungen schaltet, d. h. seine Kontakte schließt, wobei zunächst unberücksichtigt bleibt, daß bestimmte Werte der Frequenzdifferenzen und der Spannungsdifferenzen einzuhalten sind.

Unter den Annahme $\Delta f = $ const ergeben sich folgende Zusammengänge

$$\alpha_s = \Delta f \cdot t_E \cdot 360° \tag{1}$$

wobei für jeden Schalter x sich eine festgelegte Konstante

$$K_x = t_{Ex} \cdot 360° \tag{2}$$

ergibt, so daß für jeden Schalter ein der Frequenzdifferenz $\Delta f$ proportionaler Schaltwinkel

$$\alpha_{sx} = \Delta f \cdot K_x \tag{3}$$

vorliegt, bei dem der Einschaltbefehl gegeben werden muß.

Um den genauen Schaltwinkel $\alpha_{sx}$ erhalten zu können, muß daher möglichst genau die Frequenzdifferenz $\Delta f$ ermittelt und zu jedem Zeitpunkt der Winkel $\alpha$ zwischen den beiden zu vergleichenden Spannungen bestimmt werden. Bei Kenntnis von $\Delta f$ und $\alpha$ sowie der Schaltereinschaltzeit $t_E$ kann bei dem zugehörigen Schaltwinkel $\alpha_{sx}$ der Einschaltbefehl gegeben werden.

Eine ausreichend genaue Erfassung der obigen Größen setzt aber möglichst verzerrungsfreie Spannungen voraus. Diese Voraussetzung ist in der Praxis vielfach nicht erfüllt, so daß für Maschinen schädliche und für das Netz unerwünschte Parallelschaltzeitpunkte auftreten würden, die durch Unterlassen des Parallelschaltens vermieden werden müssen.

Der Erfindung liegt daher die Aufgabe zugrunde, auch bei stark verzerrten, d. h. starken Oberschwingungseinflüssen ausgesetzten Spannungen mit weitgehend eindeutigen Nulldurchgängen von Synchronmaschinen und/oder Drehstrom- Netzen jeweils den genauen Einschaltzeitpunkt zu bestimmen.

Die Lösung der gestellten Aufgabe gelingt bei dem eingangs genannten Verfahren erfindungsgemäß durch die kennzeichnenden Maßnahmen des Patentanspruchs.

Zum leichteren Verständnis der Erfindung wird zunächst wieder von der Annahme $\Delta f = $ const ausgegangen, die aus beiden erfaßten Frequenzen ermittelt wird.

Für die Erfassung der Frequenzen beider zu vergleichender Spannungen wird jeweils gemäß Fig. 2 die Periodendauer über n Perioden ausgewertet, wobei die Periodenzahl n vorgegeben oder abhängig von der Frequenzdifferenz $\Delta f$ in bestimmten Grenzen automatisch angepaßt werden kann. Die beiden zu vergleichenden Spannungen (Meßspannungen) können beispielsweise alle x Millisekunden abgetastet und ihre abgetasteten Analogwerte in Digitalgrößen umgewandelt werden. Wenn dabei gemäß Fig. 2 beispielsweise im Zeitpunkt $t_0$ ein Nulldurchgang erkannt wird, dann läßt sich durch Interpolation der angenommene Nulldurchgang bei $t_0$ aus mindestens zwei Messungen ermitteln. So kann bei einer Abtastfrequenz von 1 kHz für die Erfassung der Periodendauer jede 1 ms (x = 1) eine Abtastung erfolgen und die Millisekunden bis zum Zeitpunkt $t_5$ in Fig. 2 sowie gleichzeitig die Zahl der in den schraffierten Zonen zu den Zeitpunkten $t_1$, $t_2$, $t_3$, $t_4$ und $t_5$ festgestellten Nulldurchgänge gezählt werden. Zum Zeitpunkt $t_5$ wird wiederum durch Interpolation der angenommene Nulldurchgang festgestellt, womit die Summe $t_\Sigma$ von fünf Periodendauern zu $t_\Sigma = t_{1p} + t_{2p} + t_{3p} + t_{4p} + t_{5p}$ festgelegt ist. Der Mittelwert $t_{pm}$ für eine Periodendauer ist $t_\Sigma/n$ mit n = 5 und der Frequenzmittelwert $f_m = 1/t_{pm}$. Da bei diese « Mittelwertverfahren » Erfassungsfehler nur bei $t_0$ und $t_n$, d. h. nur am Anfang und am Ende jeder

2

Periodenfolge von n Perioden auftreten und diese bei n > 2 mit zunehmender Zahl n immer geringeren Einfluß auf die Erfassungsergebnisse ausüben können, kann auf diese Weise eine sehr genaue Ermittlung der Frequenzen der Spannungen auch bei starken Oberschwingungseinflüssen gemäß Fig. 1 erreicht werden.

Für das Zählen der abgetasteten Perioden der Spannungen wird jede der beiden Spannungen nur während einer bestimmten Zeitspanne einer Meßeinrichtung zugeführt, die durch die zulässigen oberen und unteren Grenzwerte der Betriebsfrequenz festgelegt ist.

Die bei oberschwingungsbehafteten verzerrten Spannungen nach Fig. 1 auftretenden Nulldurchgänge können mit einer gespeicherten Vergleichs-Sinuskurve verglichen werden. Bei Auftreten von nicht plausiblen, z. B. durch Störungen hervorgerufenen Nulldurchgängen der Spannungen wird die Messung abgebrochen und anschließend neu begonnen. Um auch in solchen Fällen die notwendigen aktuellen Werte der Frequenzdifferenzen $\Delta f_{akt}$ zu erhalten, wird bei Beginn der nächstfolgenden Periode eine neue Meßreihe mit n-Messungen gestartet, wobei der Meßbeginn der einzelnen Meßreihen jeweils um eine Periode verschoben ist. Im genannten Beispiel mit n = 5 werden also immer fünf Messungen durchgeführt. Dabei wird auch geprüft, ob die Frequenzdifferenz $\Delta f$ konstant ist oder sich ändert. Im letzteren Fall kann z. B. beim Synchronisieren eines Generators festgestellt werden, ob er beschleunigt oder verzögert wird.

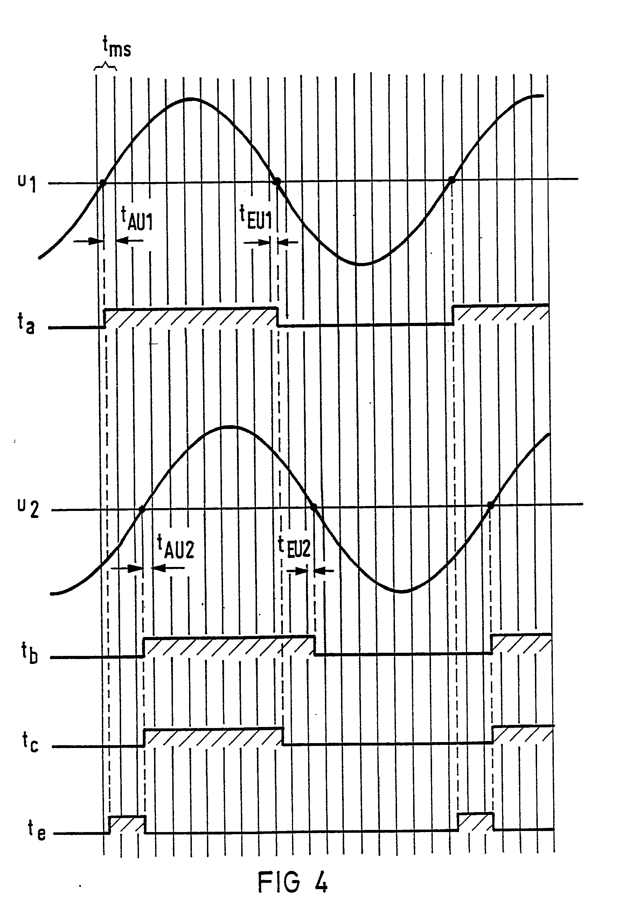

Zur Bestimmung des Winkels $\alpha$ zwischen beiden zu vergleichenden Spannungen wird eine an sich bekannte Dreieckskurve gemäß Fig. 3 auf eine nachfolgend anhand der Fig. 4 dargelegte Weise gebildet. Diese Dreieckskurve wird nicht zur Bestimmung der Frequenzdifferenz herangezogen, die ja wie vorbeschrieben gesondert ermittelt wird. Bei der rechnerischen Bildung der Dreieckskurve werden keine Filter wie sonst üblich benötigt, so daß auch nicht unerwünschte und nur mit Schwierigkeiten näherungsweise lösbare Filterlaufzeitprobleme auftreten. Die Prüfung der Dreieckskurve auf Kontinuität vor dem Schaltpunkt läßt sich darüberhinaus relativ einfach durchführen.

Aus den nach dem beschriebenen Mittelwertverfahren für die Frequenzerfassung ermittelten Nulldruchgängen nach Fig. 2 werden gemäß Fig. 4 Signalzeiten gewonnen und es wird aus der zeitlichen Überdeckung der jeweils gleiche Vorzeichen aufweisenden Halbschwingungen der Winkel $\alpha$ bestimmt. Bei einer jede Millisekunde erfolgenden Abtastung der Spannungen $u_1$ und $u_2$ mit angenommenen Frequenzen $f_1 \approx f_2$ und nahezu unverändert bleibender Frequenzdifferenz $\Delta f = f_1 - f_2$ ergeben sich für die betrachteten positiven Halbschwingungen beider Spannungen Halbschwingungsdauern $t_a$ bzw. $t_b$.

Aus diesen Halbschwingungsdauern ergeben sich durch UND-Verknüpfung gemäß Fig. 4 jeweils Signale $t_c$ und $t_e$.

Es gilt dabei :

$$\frac{t_a}{t_c} = \frac{180}{180 - \alpha}$$

woraus sich ergibt

$$\alpha = 180 \left( 1 - \frac{t_c}{t_a} \right) \qquad (4)$$

Der Winkel $\alpha$ muß darüberhinaus auch gleich sein

$$\alpha = 180 \cdot \frac{t_e}{t_a} \qquad (5)$$

Die Auswertung der negativen Halbschwingungen der beiden Spannungen $u_1$ und $u_2$ erfolgt in nicht dargestellter Weise entsprechend.

Für die Ermittlung der Signalzeiten $t_c$ und $t_e$ können für beide Spannungen $u_1$ und $u_2$ aus der Frequenzerfassung entsprechende Werte $t_{AU1,2}$ und $t_{EU1,2}$ sowie die Anzahl der Abtastintervalle in jeder Halbschwingung erhalten werden.

Für die Signalzeiten $t_c$ und $t_e$ ergeben sich nach Fig. 4 folgende Zusammenhänge :

$$t_c = t_{AU2} + t_{EU1} + (n_e - 1) \cdot t_i \qquad (6)$$
$$t_e = t_{AU1} - t_{AU2} + n_e \cdot t_i \qquad (7)$$

worin $t_i$ = das Abtastintervall von z. B. 1ms bedeutet und $n_c$ bzw. $n_e$ die Zahl der Abtastintervalle innerhalb von $t_c$ bzw. $t_e$ darstellt.

Es gilt somit :

$$t_c - t_e = \frac{1}{2} t_p \qquad (8)$$

mit $t_p$ = Periodendauer.

**0 188 638**

Bei Erfüllung der vorgenannten Bedingung unter Berücksichtigung entsprechender Toleranzen für Meßfehler und zulässige Kurvenformfehler (Abweichung von Sinuskurve) kann der Winkel $\alpha_s$ für die Ermittlung des Schaltpunktes freigegeben werden.

Zur Plausibilitätsprüfung kann die Summe der Laufzeiten aus positiver und negativer Halbschwingung mit einer Spannung verglichen werden, deren Werte für die Dauer einer Periode aus der Mittelwertsbildung für die Frequenzmessung ermittelt werden.

### Patentanspruch

Verfahren zum Parallelschalten von elektrischen Synchronmaschinen und/oder elektrischen Drehstrom-Netzen unter Erfassung des Nulldurchganges beider miteinander zu vergleichender Spannungen, wobei aus den Nulldurchgängen der einzelnen Halbschwingungen beider Spannungen Signale $t_a$, $t_b$ zur Bildung eines logisch verknüpften Signals $t_e = t_a$ & $\bar{t}_b$, sowie eines Signals $t_c = t_a$ & $t_b$ aus den Halbschwingungen gleicher Polarität zur Winkelerfassung gewonnen werden und zur Bildung eines Einschaltbefehles für Leistungsschalter unter Berücksichtigung der bekannten Eigenschaltzeit sowie der Frequenzdifferenz $\Delta f$ zwischen beiden Spannungen dienen, dadurch gekennzeichnet, daß der aktuelle Mittelwert der Frequenzdifferenz aus mehreren Periodendauern beider Spannungen gebildet und aus den Signalen zur Winkelerfassung zusammen mit dem Mittelwert der Frequenzdifferenz der Schaltpunkt für den Leistungsschalter abgeleitet wird.

### Claim

A method of connecting electrical synchronous machines and/or electrical three-phase networks in parallel involving the detection of the zero transitions of two voltages which are compared with one another, obtaining from the zero transitions of the individual half-cycles of the two voltages respective signals $t_a$ and $t_b$ to form a logic-linked signal $t_e = t_a + \bar{t}_b$ and a signal $t_c = t_a + t_b$, from the half-cycles of like polarity for purposes of angle detection and to form a connect command for power switches, taking into account the known inherent switching time and the frequency difference $\Delta f$ between the two voltages, characterised in that the mean current value of the frequency difference is formed over the duration of a plurality of periods of the two voltages and the switching point for the power switch is derived from the angle detection signals together with the mean value of the frequency difference.

### Revendication

Procédé pour brancher en parallèle des machines électriques synchrones et/ou des réseaux électriques triphasés, moyennant la détection de l'annulation des deux tensions devant être comparées l'une à l'autre, et selon lequel à partir des annulations des différentes alternances des deux tensions, on obtient des signaux $t_a$, $t_b$ pour la formation d'un signal $t_e = t_a$ & $\bar{t}_b$, obtenu par combinaison logique, ainsi que d'un signal $t_c = t_a$ & $t_b$ à partir des alternances de même polarité, pour la détection de l'angle, et qu'on utilise ces signaux pour former une instruction de branchement pour un disjoncteur de puissance, compte tenu de la durée connue de branchement propre ainsi que de la différence $\Delta f$ entre les fréquences des deux tensions, caractérisé par le fait qu'on forme la faleur moyenne réelle de la différence des fréquences sur plusieurs durées de périodes des deux tensions et qu'on tire, des signaux utilisés pour la détection de l'angle, et ce en association avec la valeur moyenne de la différence de fréquences, l'instant de branchement pour le disjoncteur de puissance.

4

FIG 1

$t_\Sigma = 5 \cdot t_{p\,mittel}$

FIG 2

-180°     0     +180°

$\dfrac{\alpha}{1°}$

FIG 3

FIG 4